# EUROPEAN PATENT SPECIFICATION

(11) **EP 0 401 921 B1**
(45) Date of publication and mention of the grant of the patent: **15.12.1993**
(21) Application number: 90201414.1
(22) Date of filing: 05.06.1990
(51) Int. Cl.: F16K 47/08, F15D 1/02

(54) **Automatic opening, dosing and closing valve**
Automatisch öffnendes, dosierendes und schliessendes Ventil
Soupape ouvrant, dosant et fermant automatiquement

(30) Priority: 09.06.1989 ES 8901892
(43) Date of publication of application: 12.12.1990
(73) Proprietor: COMERCIAL VAYCA, S.L., E-36213 Vigo (ES)
(72) Inventor: Ruibal, Santome, Manuel, E-36213 Vigo (ES)
(74) Representative: Ungria Lopez, Javier

(56) References cited:
- DE-A- 1 960 709
- FR-A- 1 236 014
- GB-A- 565 291

## Description

The instant invention relates to an automatic opening, dosing and closing valve for use in connection with fluid pipe outlets and conceived to replace conventional cocks, taps and/or flow valves. The valve is connected with its one end to a fluid supply and with the other to a coupler or connector of a fluid receiving line and automatically opens when the coupler is connected to the valve, closes when the connector is removed from the valve and also, when the coupler or connector is threaded to the valve, the valve doses the passing fluid according to the degree of threading of the coupler or connector to the valve body.

The invention as defined in claim 1 provides a greater safety, requires less space than conventional valves and is simple in structure and unexpensive to manufacture.

One way of carrying out the invention is described in detail herebelow with reference to the drawings which illustrate only one specific embodiment, in which:

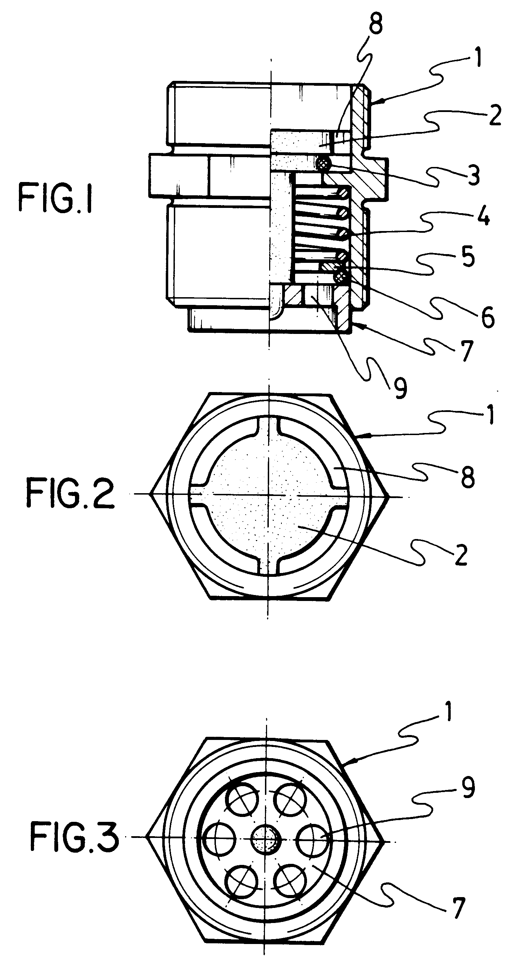

Fig. 1 is a raised view of the valve assembly with half a longitudinal section showing the arrangement of the valve's inside assembly.

Fig. 2 - It represents a top plan view.

Fig. 3 - It represents a bottom plan view.

### DESCRIPTION OF THE PREFERRED EMBODIMENT

The following elements have been indicated in these figures with the references given hereinafter:
1 - Valve body
2 - Closing valve
3 - O-ring seal
4 - Compressing spring
5 - Self-adjustable ring
6 - O-ring seal
7 - Bottom guide
8 - Top opening passages
9 - Bottom opening passages

Referring to the above cited illustrations which have a schematic form of the industrial embodiment thereof and which are only included with a merely informative nature and therefore non-restrictive one, we will have:

An automatic opening, dosing and closing valve, formed by a valve body (1) which houses inside it the closing valve (2), upon the O-ring seal (3). Said valve (2) is mounted on the bottom guide (7) and pressed in opening and closing by the spring (4), the self-adjustable ring (5) and the O-ring seal (6.) The flow of the fluid is done through a series of top opening passages (8) over the top part of the valve body (1) and another series of bottom opening passages (9) over the bottom guide (7.)

## Claims

1. Automatic opening, dosing and closing valve consisting of:
- a cylindrical valve body (1) having on its outer surface a central hexagonal area and outer end threads for connecting said valve body (1) on one end with a fluid supply and on the other end with a coupler or connector;
- a bottom member (7) shiftingly provided in the cylindrical inside of said valve body (1) on said other end of the valve body (1) and having a series of bottom holes (9);
- a valve member (2) mounted with one end on said bottom member (7) and cooperating with its other end via an O-ring seal (3) with a valve seat provided in the inside of said valve body (1) between said bottom member (7) and said other end, said other end of said valve member (2) being configured such that a series of holes (8) is formed between said valve member (2) and the inside of said valve body (1);
- a compressing spring (4) arranged between said valve seat and said bottom member (7);
whereby in the case where said connector or coupler is connected to said valve body (1), said bottom member (7) is shifted against the force of said spring (4) in a direction to open said valve member (2) and in the case where said coupler or connector is removed from the said valve body (1), said spring (4) automatically closes said valve member (2) by shifting said bottom member (7) in the opposite direction.

2. Valve according to claim 1, wherein said O-ring seal (3) is mounted on said valve member (2) whereby said valve seat provides sealing with said valve member (2) and said O-ring seal (3).

3. Valve according to claim 1, wherein a further O-ring seal (6) is situated on the upper end of said bottom member (7) which abuts against a self-adjustable ring (5) abutting against the lower end of said spring (4).

## Patentansprüche

1. Automatisch öffnendes, dosierendes und schließendes Ventil, das besteht aus:
- einem zylindrischen Ventilkörper (1), der an seiner Außenfläche einen mittleren sechseckigen Bereich und äußere Abschlußgewinde zur Verbindung des Ventilkörpers (1) mit einer Flüssigkeitszufuhr an einem Ende und einem Kupplungsstück oder Verbindungsstück an dem anderen Ende aufweist;
- einem Bodenelement (7), das sich verschiebbar im zylindrischen Inneren des Ventilkörpers (1) an dem anderen Ende des Ventilkörpers (1) befindet und eine Reihe von Bodenlöchern (9) aufweist;
- einem Ventilelement (2), das mit einem Ende an dem Bodenelement (7) angebracht ist und mit seinem anderen Ende über eine O-Ring-Dichtung (3) mit einem Ventilsitz zusammenwirkt, der sich im Inneren des Ventilkörpers (1) zwischen dem Bodenelement (7) und dem anderen Ende befindet, wobei das andere Ende des Ventilelementes (2) so geformt ist, daß eine Reihe von Löchern (8) zwischen dem Ventilelement (2) und dem Inneren des Ventilkörpers (1) ausgeformt sind;
- einer Druckfeder (4), die zwischen dem Ventilsitz und dem Bodenelement (7) angeordnet ist;
wobei, wenn das Verbindungsstück oder Kupplungsstück mit dem Ventilkörper (1) verbunden wird, das Bodenelement (7) gegen die Kraft der Feder (4) in einer Richtung verschoben wird, in der es das Ventilelement (2) öffnet, und, wenn das Kupplungsstück oder das Verbindungsstück von dem Ventilkörper (1) entfernt wird, die Feder (4) das Ventilelement (2) automatisch schließt, indem das Bodenelement (7) in der entgegengesetzten Richtung verschoben wird.

2. Ventil nach Anspruch 1, wobei die O-Ring-Dichtung (3) an dem Ventilelement (2) angebracht ist, wodurch der Ventilsitz eine Dichtung mit dem Ventilelement (2) und der O-Ring-Dichtung (3) herstellt.

3. Ventil nach Anspruch 1, wobei sich eine weitere O-Ring-Dichtung (6) am oberen Ende des Bodenelementes (7) befindet, die an einem sich selbsttätig einstellenden Ring (5) anliegt, der am unteren Ende der Feder (4) anliegt.

## Revendications

1. Soupape à ouverture, dosage et fermeture automatiques composée de :
- un corps de soupape cylindrique (1) ayant sur sa surface extérieure une zone hexagonale centrale et des filets d'extrémité extérieurs afin de relier ledit corps de soupape (1) à une extrémité à une alimentation en fluide et à l'autre extrémité à un raccord ou un connecteur;
- un élément inférieur (7) prévu de façon mobile dans l'intérieur cylindrique dudit corps de soupape (1) sur ladite autre extrémité du corps de soupape (1) et ayant une série de trous inférieurs (9);
- un élément de soupape (2) monté avec une extrémité sur ledit élément inférieur (7) et coopérant avec son autre extrémité et par l'intermédiaire d'un joint torique (3) avec un siège de soupape prévu dans l'intérieur dudit corps de soupape (1) entre ledit élément inférieur (7) et ladite autre extrémité, ladite autre extrémité dudit élément de soupape (2) étant configurée de telle sorte qu'une série de trous (8) est formée entre ledit élément de soupape (2) et l'intérieur dudit corps de soupape (1);
- un ressort de compression (4) disposé entre ledit siège de soupape et ledit élément inférieur (7);
ledit élément inférieur (7) étant déplacé à l'encontre de la force dudit ressort (4) dans une direction d'ouverture dudit élément de soupape (2) dans le cas où ledit connecteur ou raccord est relié audit corps de soupape (1), et ledit ressort (4) fermant automatiquement ledit élément de soupape (2) en déplaçant ledit élément inférieur (7) dans la direction opposée dans le cas où ledit connecteur ou raccord est enlevé dudit corps de soupape (1).

2. Soupape selon la revendication 1, dans laquelle ledit joint torique (3) est monté sur ledit élément de soupape (2), ledit siège de soupape assurant l'étanchéité avec ledit élément de soupape (2) et ledit joint torique (3).

3. Soupape selon la revendication 1, dans laquelle un autre joint torique (6)se trouve sur l'extrémité supérieur dudit élément inférieur (7) qui bute contre une bague à réglage automatique (5) butant contre l'extrémité inférieure dudit ressort (4).
